# EUROPEAN PATENT SPECIFICATION

(11) **EP 3 623 601 B1**
(45) Date of publication and mention of the grant of the patent: **24.08.2022**
(21) Application number: 19196639.9
(22) Date of filing: 11.09.2019
(51) Int. Cl.: F02C 3/10, F02C 3/14, F02C 6/20, F02C 7/36

(54) **SPLIT COMPRESSOR SYSTEM ON MULTI-SPOOL ENGINE**
GETEILTES VERDICHTERSYSTEM AN EINEM MEHRSPULENMOTOR
SYSTÈME À DOUBLE COMPRESSEUR SUR UN MOTEUR MULTI-BOBINES

(30) Priority: 12.09.2018 US 201816128928
(43) Date of publication of application: 18.03.2020
(73) Proprietor: Pratt & Whitney Canada Corp., Longueuil, Québec J4G 1A1 (CA)
(72) Inventor: PLANTE, Ghislain, Longueuil, Québec J4G 1A1 (CA); MORGAN, Keith, Longueuil, Québec J4G 1A1 (CA); COUTURE-GAGNON, Vincent, Longueuil, Québec J4G 1A1 (CA)
(74) Representative: Dehns

(56) References cited:
- US-A1- 2006 225 431
- US-A1- 2014 250 860
- US-A1- 2016 169 102
- US-A1- 2018 172 012

## Description

### TECHNICAL FIELD

The application relates generally to gas turbine engines and, more particularly, to a split compressor system for a multi-spool engine.

### BACKGROUND OF THE ART

Gas turbine engines are the subject of continuous research to, among other things, improve the engine efficiency, reduce costs, reduce specific fuel consumption (SFC) and minimize exhaust emissions.

SFC is inversely proportional to the overall thermal efficiency of the engine. As the SFC decreases, the fuel efficiency of the engine increases. The thermal efficiency is function of the engine components efficiency, the overall pressure ratio and the turbine inlet temperature. While improvements have been made in this area of technology, there remains a need for further contributions.

US 2014/0250860 A1 discloses a multi-shaft gas turbine engine.

US 2018/0172012 A1 discloses a reverse flow engine architecture.

US 2016/0169102 A1 discloses a reverse core flow gas turbine engine.

### SUMMARY

In one aspect, there is provided a turboprop or turboshaft aircraft engine as set forth in claim 1.

Preferred embodiments of the engine are as set forth in the dependent claims.

### DESCRIPTION OF THE DRAWINGS

Reference is now made to the accompanying figures in which:
Fig. 1 is a schematic cross-sectional view of a multi-spool turboprop engine having a reverse flow configuration;
Fig. 2 is a schematic cross-sectional view of a multi-spool turboprop engine having a through flow configuration; and
Fig. 3 is a schematic view illustrating a low pressure spool wherein the low pressure compressor is geared to the low pressure turbine, thereby allowing the low pressure compressor to be driven at a different speed than the low pressure turbine.

### DETAILED DESCRIPTION

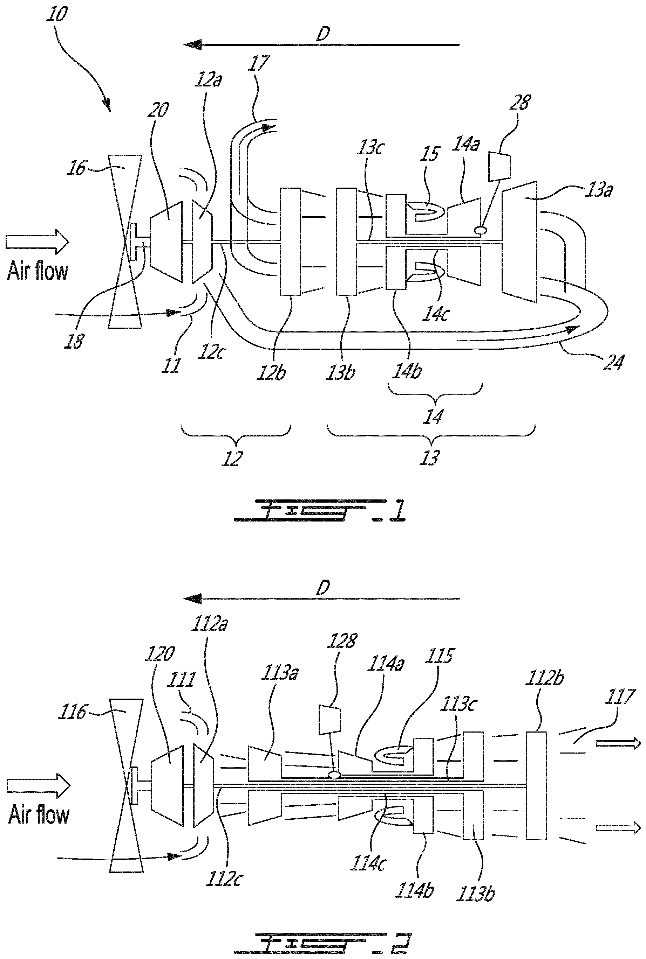

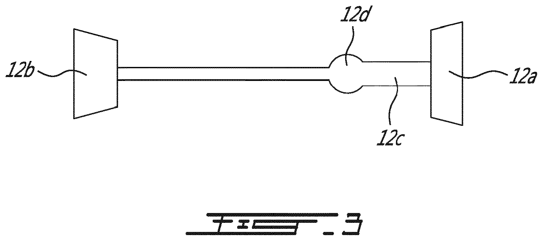

Fig. 1 illustrates a first example of a multi-spool gas turbine engine 10 of a type preferably provided for use in subsonic flight, and generally comprising multiple spools which perform compression to pressurize atmospheric air received through an air inlet 11, and which extract energy from combustion gases before they exit the engine via an exhaust outlet 17. The term "spool" is herein intended to broadly refer to drivingly connected turbine and compressor rotors and is, thus, not limited to a compressor and turbine assembly on a single shaft (i.e. direct drive). As will be seen hereinbelow with reference to Fig. 3, a spool can, for instance, include a compressor rotor geared to a turbine rotor.

The illustrative embodiment shown in Fig. 1 is an engine architecture including a split compression system on three different spools. Splitting the compressor allows to better distribute the compressor work between each spool. This strategy may be used to reduce specific fuel consumption (SFC). As will be seen herein below, the introduction of an extra compression stage on the low pressure spool allows increasing the overall pressure ratio.

More particularly, Fig. 1 illustrates a turboprop engine 10 comprising a first or low pressure (LP) spool 12, a second or intermediate pressure (IP) spool 13 and a third or high pressure (HP) spool 14 arranged along a centerline axis of the engine 10. The IP and HP spools 13, 14 form the engine core. It is noted that the engine core could be offset from the LP spool 12.

The LP spool 12 generally comprises an LP compressor 12a for pressurizing air received from the air inlet 11 and an LP turbine 12b for extracting energy from combustion gases discharged from a combustor 15 in which compressed air is mixed with fuel and ignited for generating an annular stream of hot combustion gases. According to one aspect of the embodiment shown in Fig. 1, the LP compressor 12a and the LP turbine 12b are coaxially mounted for rotation about a common axis, which is in-line with the engine centerline.

The LP turbine 12b is also known as the power turbine. The LP turbine 12b may drive two or more rotatable loads. According to the illustrated embodiment, the first load is a propeller 16, which provides thrust for flight and taxiing in aircraft applications. However, it is understood that the first load could be any suitable component, or any combination of suitable components, that is capable of receiving a rotational drive from the LP turbine 12b. For instance, in an alternate embodiment where the engine 10 is a turboshaft instead of a turboprop as depicted in Fig. 1, the first load could include helicopter main rotor(s) and/or tail rotor(s).

In the embodiment shown in Fig. 1, the first load (i.e. the propeller 16) is drivingly coupled to an output shaft 18 extending axially from an output end of a reduction gearbox (RGB) 20. The input end of the RGB 20 is mechanically coupled to an LP turbine shaft 12c drivingly connected to the LP turbine 12b. As shown in Fig. 1, the LP turbine shaft 12c may extend axially centrally through the LP compressor 12a and coaxially relative to the engine centerline. The RGB 20 processes and outputs the rotational drive transferred thereto from the LP turbine 12b via the LP turbine shaft 12c through known gear reduction techniques. The RGB 20 allows for the propeller 16 to be driven at its optimal rotational speed, which is different from the rotational speed of the LP turbine 12b.

Still referring to Fig. 1, the second load driven by the LP turbine 12b is the LP compressor 12a which is disposed adjacent to the RGB 20 on an aft side thereof. The LP compressor 12a can be directly connected to the LP turbine 12b via shaft 12c or, as shown in Fig. 3, the LP compressor 12a can be geared via a gearbox 12d to the LP turbine 12b, thereby allowing the LP compressor 12a to run at a different rotational speed from the LP turbine 12b. This provides more flexibility in the selection of design points for the LP compressor 12a. As the propeller 16 operates at a fixed speed or within a narrow range of speeds, which is not always in harmony with the operation zone of the compressor 12a, the addition of gearbox 12d between the LP turbine 12b and the LP compressor 12b provides more flexibility in the operation of the LP compressor 12a. In this way, the LP turbine 12b can be more easily used to drive separate loads having different speed input needs.

The IP spool 13 comprises an IP compressor 13a drivingly connected to an IP turbine 13b through an IP shaft 13c. The IP compressor 13 has an inlet connected in flow communication with an outlet of the LP compressor 12a via an external duct line 24. The duct line 24 is disposed outside of the engine core to minimize heat transfer from the combustion gases flowing through the compressor turbine section of the engine. The duct line 24 extends from a front end of the engine to a rear end thereof in order to direct the air from the LP compressor 12a to the IP compressor 13a. A heat exchanger (not shown), such as an air-to-air cooler, can be provided in external line 24 to cool down the pressurized air fed to the IP compressor 13a. This may allow further improving the engine specific power by maintaining the air pressure while lowering the gas temperature (enthalpy reduction at constant pressure).

The HP spool 14 generally comprises an HP compressor 14a having an inlet connected in flow communication with an outlet of the IP compressor 13a for receiving pressurized air therefrom. Still referring to Fig. 1, it can be appreciated that the HP spool further comprises an HP turbine 14b immediately downstream of the combustor 15. The HP turbine 14b is drivingly connected to the HP compressor 14a via an HP shaft 14c. In the illustrated embodiment, the IP shaft 13c extends centrally through the HP shaft 14c along the centerline of the engine. The HP spool 14 may be drivingly connected to an accessory gear box (AGB) 28 for providing drive outputs to various accessories (e.g. fuel pump, starter-generator, oil pump, scavenge pump, etc.). For instance, a tower shaft may be provided to mechanically link the AGB 28 to the HP compressor 14a.

In operation, the LP compressor 12a pressurizes the air received from air inlet 11. The air is then directed from the LP compressor 12a to the IP compressor 13a via duct line 24. As the air travels through line 24 it may be cooled down by heat exchanger (when such a heat exchanger is provided). The IP compressor 13a further pressurized the air before it is directed to the HP compressor 14a. The HP pressure compressor 14a further compresses the air before the compressed air be mixed with fuel and ignited in the combustor 15. The combustion gases discharged from the combustor 15 flow through the various stages of the HP turbine 14b where energy is extracted to drive the HP compressor 14a and the RGB 28. The combustion gases flow from the HP turbine 14b to the IP turbine 13b where energy is extracted to drive the IP compressor 13a. The combustion gases then flows from the IP turbine 13b to the LP turbine 12b where further energy is extracted from the combustion gases by the LP turbine 12b to drive the LP compressor 12a and the propeller 16. The combustion gases are then discharged from the engine 10 via exhaust 17.

It can be appreciated that during operation of the engine 10, the LP compressor 12a driven by the LP turbine 12b feeds pressurized air to the IP compressor 13a, which in turn feeds the pressurized air to HP compressor 14a. Therefore, the pressurized air flow produced by the LP compressor 12a is provided to the IP compressor 13a and then to HP compressor 14a and contributes to the work of the LP turbine 12b, the IP turbine 13b and the HP turbine 14b.

It can thus be appreciated that the presence of the above-described LP, IP and HP spools 12, 14 and 14 provides the engine 10 with a "split compressor" arrangement. More particularly, some of the work required to compress the incoming air is transferred from the HP compressor 14a to IP compressor 13a and the LP compressor 12a. In other words, some of the compression work is transferred from the HP turbine 14b to IP turbine 13b and to the more efficient LP turbine 12b. This transfer of work may contribute to higher pressure ratios while maintaining a relatively small number of compressor rotors. In a particular embodiment, higher pressure ratios allow for better engine specific fuel consumption (SFC). These factors can contribute to a lower overall weight for the engine 10. The transfer of compression work from the HP compressor 14a to the IP compressor 13a and the LP compressor 12a contrasts with some conventional turboprop and turboshaft engines, in which the high pressure compressor (and thus the high pressure turbine) perform all of the compression work.

An alternative to reduce the specific fuel consumption· (SFC) would be to increase the pressure ratio of each compressor modules on each core spools. However, according to this approach, the compressor and turbine loading would increase. In consequence, the compressor and turbine efficiency would reduce, which will deteriorate any SFC gain obtain by the increase of the overall pressure ratio and would be detrimental to compressor surge margin. In order to compensate, it could be even required to increase the number compressor and of turbine stages, which is costly, and increase the design complexity and risk. The end result would be an engine length and weight increase. The provision of additional compressor and turbine stages would also contribute to increase the costs.

As discussed above, the overall pressure ratio of the illustrated embodiment is rather herein increased by introducing an extra compression stage on the low spool (i.e. the LP compressor 12a). Contrary to turbofan applications, in turboshaft and turboprop applications, the low spool speed is not modulated with the power. In some cases, it can run at constant speed as it is often observed on turboprop and turboshaft applications. This increases the operability risk of the engine. Accordingly, the power turbine (the LP turbine) of turboprop and turboshaft engines is typically provided as a free turbine.

The engine 10 shown in Fig. 1 may be referred to as a "reverse-flow" engine because gases flow through the HP compressor 14a and the turbine section of the engine 10 in a rear-to-front direction. This is in contrast to a "through-flow" gas turbine engine (Fig. 2) in which gases flow through the core of the engine from a front portion to a rear portion. The direction of the flow of gases through the engine 10 disclosed herein can be better appreciated by considering that the gases flow through the turbine section in the same direction D as the one along which the engine 10 travels during flight. Stated differently, gases flow through the engine 10 shown in Fig. 1 from a rear end thereof towards the propeller 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to the propeller 16. Similarly, a component of the engine 10 that is "aft" of another component is arranged within the engine 10 such that it is further away from the propeller 16.

Figure 2 illustrates a through flow variant of the split compression system on a three-spool engine. Like components are designated by the same reference numeral but in the hundreds and a duplicate description thereof will be omitted for brevity. The embodiment of Fig. 2 mainly differs from the embodiment of Fig. 1 in that the engine gases flow from the front end of the engine to the rear end thereof (i.e. in a direction opposite to the direction of travel D). In this embodiment the LP shaft 112c extends concentrically through the IP shaft 113c, which, in turn, extends concentrically through the HP shaft 114C. The LP turbine 112b is disposed at the rear end of the engine.

The above description is meant to be exemplary only, and one skilled in the art will recognize that changes may be made to the embodiments described without departing from the scope of the invention disclosed. Any modifications which fall within the scope of the present invention will be apparent to those skilled in the art, in light of a review of this disclosure, the scope of the invention being defined by the appended claims.

## Claims

1. A turboprop or turboshaft aircraft engine (10) comprising:
a first spool (12;112) including a first turbine (12b;112b) drivingly connected to a first compressor (12a;112a) and a load (16;116), the load (16;116) comprising a propeller or helicopter rotor;
a second spool (13;113) including a second turbine (13b;113b) drivingly connected to a second compressor (13a;113a), the second compressor (13a;113a) fluidly connected to the first compressor (12a;112a) to receive compressed air therefrom; and
a third spool (14;114) including a third turbine (14b;114b) drivingly connected to a third compressor (14a;114a), the third compressor (14a;114a) fluidly connected to the second compressor (13a;113a) to receive compressed air therefrom,
**characterised in that**:
first and second gear boxes (12d,20;120) are respectively provided between the first turbine (12b;112b) and the first compressor (12a;112a) and the first compressor (12a;112a) and the load (16;116), the first gearbox (12d) drivingly connecting the first turbine (12b;112b) to the first compressor (12a;112a), the second gearbox (20;120) drivingly connecting the first turbine (126;112b) to the load (16;116).

2. The turboprop or turboshaft engine (10) defined in claim 1, wherein the second turbine (13b;113b) has an outlet connected to an inlet of the first turbine (12b;112b), and the third turbine (14b;114b) has an outlet connected to an inlet of the second turbine (13b;113b).

3. The turboprop or turboshaft engine (10) defined in claim 1 or 2, wherein the first spool (12) is disposed forward of the second spool (13) and the third spool (14) relative to a direction of travel (D), the second compressor (13a) is connected to the second turbine (13b) through a second shaft (13c), the third compressor (14a) is connected to the third turbine (14b) via a third shaft (14c), the second shaft (13c) extending concentrically within the third shaft (14c).

4. The turboprop or turboshaft engine (10) defined in any preceding claim, wherein the third spool (14;114) is drivingly connected to an accessory gearbox (AGB) (28;128).

5. The turboprop or turboshaft engine (10) defined in claim 4, wherein the engine (10) is a turboprop engine (10), the load (16;116) is a propeller (16;116), and the first compressor (12a;112a) is disposed adjacent to the second gearbox (20;120) on an aft side thereof.

6. The turboprop or turboshaft engine (10) defined in any preceding claim, wherein the engine (10) is a reverse flow engine (10), the second spool (13) and the third spools (14) are concentric, and the first spool (12) is disposed axially forward of the second and third spools (13,14).

## Patentansprüche

1. Turboprop- oder Turbowellen-Luftfahrzeugmotor (10), umfassend:
eine erste Spule (12; 112) mit einer ersten Turbine (12b; 112b), die antreibend mit einem ersten Kompressor (12a; 112a) und einer Last (16; 116) verbunden ist, wobei die Last (16; 116) einen Propeller oder Hubschrauberrotor umfasst;
eine zweite Spule (13; 113) mit einer zweiten Turbine (13b; 113b), die antreibend mit einem zweiten Kompressor (13a; 113a) verbunden ist, wobei der zweite Kompressor (13a; 113a) fluidisch mit dem ersten Kompressor (12a; 112a) verbunden ist, um von dort Druckluft zu empfangen; und
eine dritte Spule (14; 114), mit einer dritten Turbine (14b; 114b), die antreibend mit einem dritten Kompressor (14a; 114a) verbunden ist, wobei der dritte Kompressor (14a; 114a) fluidisch mit dem zweiten Kompressor (13a; 113a) verbunden ist, um von dort Druckluft zu empfangen,
**dadurch gekennzeichnet, dass**:
ein erstes und zweites Getriebe (12d, 20; 120) jeweils zwischen der ersten Turbine (12b; 112b) und dem ersten Kompressor (12a; 112a) und dem ersten Kompressor (12a; 112a) und der Last (16; 116) bereitgestellt sind, wobei das erste Getriebe (12d) die erste Turbine (12b; 112b) mit dem ersten Verdichter (12a; 112a) antreibend verbindet, das zweite Getriebe (20; 120) die erste Turbine (126; 112b) mit der Last (16; 116) antreibend verbindet.

2. Turboprop- oder Turbowellenmotor (10) nach Anspruch 1, wobei die zweite Turbine (13b; 113b) einen Auslass aufweist, der mit einem Einlass der ersten Turbine (12b; 112b) verbunden ist, und die dritte Turbine (14b; 114b) einen Auslass aufweist, der mit einem Einlass der zweiten Turbine (13b; 113b) verbunden ist.

3. Turboprop- oder Turbowellenmotor (10) nach Anspruch 1 oder 2, wobei die erste Spule (12) relativ zu einer Fahrtrichtung (D) vor der zweiten Spule (13) und der dritten Spule (14) angeordnet ist, der zweite Kompressor (13a) mit der zweiten Turbine (13b) über eine zweite Welle (13c) verbunden ist, der dritte Kompressor (14a) mit der dritten Turbine (14b) über eine dritte Welle (14c) verbunden ist, wobei sich die zweite Welle (13c) konzentrisch innerhalb der dritten Welle (14c) erstreckt.

4. Turboprop- oder Turbowellenmotor (10) nach einem der vorhergehenden Ansprüche, wobei die dritte Spule (14; 114) antreibend mit einem Zubehörgetriebe (AGB) (28; 128) verbunden ist.

5. Turboprop- oder Turbowellenmotor (10) nach Anspruch 4, wobei der Motor (10) ein Turbopropmotor (10) ist, die Last (16; 116) ein Propeller (16; 116) ist und der erste Kompressor (12a; 112a) dem zweiten Getriebe (20; 120) benachbart, an einer hinteren Seite davon, angeordnet ist.

6. Turboprop- oder Turbowellenmotor (10) nach einem der vorhergehenden Ansprüche, wobei der Motor (10) ein Gegenstrommotor (10) ist, die zweite Spule (13) und die dritte Spule (14) konzentrisch sind und die erste Spule (12) axial vor der zweiten und dritten Spule (13, 14) angeordnet ist.

## Revendications

1. Turbopropulseur ou turbomoteur d'aéronef (10) comprenant :
une première bobine (12 ; 112) comportant une première turbine (12b ; 112b) reliée par entraînement à un premier compresseur (12a ; 112a) et une charge (16 ; 116), la charge (16 ; 116) comprenant un rotor d'hélice ou d'hélicoptère ;
une deuxième bobine (13 ; 113) comportant une deuxième turbine (13b ; 113b) reliée par entraînement à un deuxième compresseur (13a ; 113a), le deuxième compresseur (13a ; 113a) étant relié fluidiquement au premier compresseur (12a ; 112a) pour recevoir de l'air comprimé de celui-ci ; et
une troisième bobine (14 ; 114) comportant une troisième turbine (14b ; 114b) reliée par entraînement à un troisième compresseur (14a ; 114a), le troisième compresseur (14a ; 114a) étant relié fluidiquement au deuxième compresseur (13a ; 113a) pour recevoir de l'air comprimé de celui-ci,
**caractérisé en ce que** :
des première et seconde boîtes de vitesses (12d, 20 ; 120) sont respectivement disposées entre la première turbine (12b ; 112b) et le premier compresseur (12a ; 112a) et le premier compresseur (12a ; 112a) et la charge (16 ; 116), la première boîte de vitesses (12d) reliant par entraînement la première turbine (12b ; 112b) au premier compresseur (12a ; 112a), la seconde boîte de vitesses (20 ; 120) reliant par entraînement la première turbine (126 ; 112b) à la charge (16 ;116).

2. Turbopropulseur ou turbomoteur (10) selon la revendication 1, dans lequel la deuxième turbine (13b ; 113b) a une sortie reliée à une entrée de la première turbine (12b ; 112b), et la troisième turbine (14b ; 114b) a une sortie reliée à une entrée de la deuxième turbine (13b ; 113b).

3. Turbopropulseur ou turbomoteur (10) selon la revendication 1 ou 2, dans lequel la première bobine (12) est disposée à l'avant de la deuxième bobine (13) et de la troisième bobine (14) par rapport à une direction de déplacement (D), le deuxième compresseur (13a) est relié à la deuxième turbine (13b) par l'intermédiaire d'un deuxième arbre (13c), le troisième compresseur (14a) est relié à la troisième turbine (14b) via un troisième arbre (14c), le deuxième arbre (13c) s'étendant concentriquement à l'intérieur du troisième arbre (14c).

4. Turbopropulseur ou turbomoteur (10) selon une quelconque revendication précédente, dans lequel la troisième bobine (14 ; 114) est reliée par entraînement à un boîtier d'entraînement des accessoires (AGB) (28 ; 128).

5. Turbopropulseur ou turbomoteur (10) selon la revendication 4, dans lequel le moteur (10) est un turbopropulseur (10), la charge (16 ; 116) est une hélice (16 ; 116), et le premier compresseur (12a ; 112a) est disposé adjacent à la seconde boîte de vitesses (20 ; 120) sur un côté arrière de celle-ci.

6. Turbopropulseur ou turbomoteur (10) selon une quelconque revendication précédente, dans lequel le moteur (10) est un moteur à flux inversé (10), la deuxième bobine (13) et la troisième bobine (14) sont concentriques, et la première bobine (12) est disposée axialement à l'avant des deuxième et troisième bobines (13, 14).
